# EUROPEAN PATENT APPLICATION

(11) **EP 4 772 770 A1**
(43) Date of publication of application: **08.07.2026**
(21) Application number: 24881069.9
(22) Date of filing: 27.06.2024
(51) Int. Cl.: F16H 57/04, H02K 7/116, F16H 57/02, B60K 1/00, B60K 11/02

(54) **HOUSING AND ELECTRIC DRIVE ASSEMBLY**

(30) Priority: 26.10.2023 CN 202311418400
(71) Applicant: Dongfeng Motor Group Co., Ltd, Wuhan, Hubei 430056 (CN)
(72) Inventor: YU, Jiajia, Wuhan, Hubei 430056 (CN); XU, Zhu, Wuhan, Hubei 430056 (CN); XUE, Long, Wuhan, Hubei 430056 (CN); TANG, Chen, Wuhan, Hubei 430056 (CN); JIN, Xiang, Wuhan, Hubei 430056 (CN)
(74) Representative: Valet Patent Services Limited
(86) International application number: PCT/CN2024/101961
(87) International publication number: WO 2025/086693

(57) **Abstract**

A housing (10) is provided with a hollow cavity (10a) and a first flow guide channel (10b). The hollow cavity (10a) has a gear mounting area (10a1) and a drive mounting area (10a2). The gear mounting area (10a1) is used for mounting a gear set (20), and the drive mounting area (10a2) is used for mounting a motor assembly (30). An end of the first flow guide channel (10b) is in communication with the gear mounting area (10a1), and another end of the first flow guide channel (10b) is in communication with the drive mounting area (10a2). The first flow guide channel (10b) is used for allowing coolant oil to flow from the gear mounting area (10a1) into the drive mounting area (10a2).

## Description

### CROSS-REFERENCE TO RELATED APPLICATION

The embodiments of the application are based on and claim the priority of the Chinese patent application No. 202311418400.X, filed on October 26, 2023. The entire contents of the Chinese patent application are incorporated herein by reference into the embodiments of the present application.

### TECHNICAL FIELD

The application relates to the technical field of vehicles, and in particular to a housing and an electric drive assembly.

### BACKGROUND

An oil cooling system is mostly adopted for cooling and lubricating a gear set and a motor in an electric drive assembly. Compared with an electric drive assembly of a pure electric passenger vehicle, a cooling demand of a pure electric off-road vehicle much greater. In the related art, in a motor of an electric drive assembly, a spray cooling for the motor stator is performed through a cooperation of an oil pump and an oil spray pipe. In this way, the cooling demand of the pure electric off-road vehicle can hardly be met.

### SUMMARY

In view of this, the application is intended to provide an electric drive assembly and a housing with a better cooling effect.

To achieve the above objective, the application provides a housing, comprising:
a hollow cavity having a gear mounting area and a drive mounting area, the gear mounting area being used for mounting a gear set, the drive mounting area being used for mounting a motor assembly; and
a first flow guide channel, an end of which being in communication with the gear mounting area, another end of which being in communication with the drive mounting area, the first flow guide channel being used for allowing a coolant oil to flow from the gear mounting area into the drive mounting area.

As a second aspect, the application provides an electric drive assembly, comprising:
the above-mentioned housing, a coolant oil being contained in the hollow cavity;
a gear set disposed in the gear mounting area, a portion of the gear set extending below a liquid level of the coolant oil; and
a motor assembly, which is disposed in the drive mounting area and drivingly connected to the gear set.

As a third aspect, the application provides an electric drive assembly, comprising:
the housing according to any one of the above embodiments;
a gear set disposed in the gear mounting area;
a motor assembly, which is disposed in the drive mounting area and drivingly connected to the gear set;
optionally, a second flow guide channel is defined between the motor assembly and the side wall which is located on a peripheral side of the motor assembly.

In the housing and the electric drive assembly provided by the application, an end of the first flow guide channel is in communication with the gear mounting area, and another end of the first flow guide channel is in communication with the drive mounting area. The gear set is disposed in the gear mounting area, and when the gear set is in a rotating state, the gear set can accelerate the coolant oil and make the coolant oil enter the first flow guide channel, and the coolant oil flows into the drive mounting area along the first flow guide channel to cool the motor assembly located in the drive mounting cavity.

### BRIEF DESCRIPTION OF DRAWINGS

FIG. 1 is a schematic structural diagram showing an internal of a housing of an electric drive assembly according to one or more embodiments of the application.
FIG. 2 is an enlarged partial schematic diagram of the electric drive assembly in FIG. 1.
FIG. 3 is a schematic structural diagram showing a first half shell part, a first flow guide rib and a third flow guide rib of an electric drive assembly according to one or more embodiments of the application.
FIG. 4 is a schematic diagram showing a coolant oil path between an oil blocking protrusion and an oil collection cavity of an electric drive assembly according to one or more embodiments of the application.
FIG. 5 is a schematic structural diagram showing a second half shell part, a second flow guide rib and a fourth flow guide rib of an electric drive assembly according to one or more embodiments of the application.
FIG. 6 is a schematic diagram showing a coolant oil path between the oil collection cavity and an oil storage area of an electric drive assembly according to one or more embodiments of the application.
FIG. 7 is a schematic structural diagram of an electric drive assembly according to one or more embodiments of the application.

Description of reference numerals
10, housing; 10a, hollow cavity; 10a1, gear mounting area; 10a2, drive mounting area ; 10a3, oil storage area ; 10b, first flow guide channel; 10c, second flow guide channel ; 10d, third flow guide channel; 11, end wall ;12, side wall; 121, first side wall; 122, second side wall; 123, oil blocking protrusion; 13, first flow guide body; 13a, oil passing channel; 13b, first oil return hole; 13c, second oil return hole ;131, first flow guide rib ;132, second flow guide rib; 14, second flow guide body ;141, third flow guide rib; 142, fourth flow guide rib; 15, third flow guide body; 15a, oil collection cavity;
20, gear set;
30, motor assembly.

### DETAILED DESCRIPTION

The embodiments of the application will be described in further detail below with reference to the accompanying drawings and embodiments. The following examples are used to illustrate the invention, but are not intended to limit the scope of the invention.

In the description of the embodiments of the invention, it should be noted that the terms "first", "second" and "third" are only used for descriptive purposes, and cannot be understood as indicating or implying relative importance.

The embodiments of the application provide a housing, which is suitable for an electric drive assembly. The electric drive assembly can be disposed in a vehicle to provide a power for the vehicle to travel.

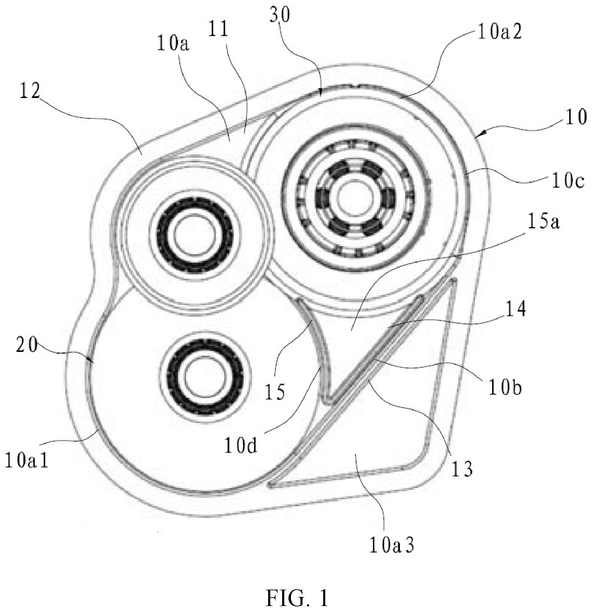

As shown in FIG. 1 to FIG. 7, an electric drive assembly is further provided according to an embodiment of the invention, including a housing 10, a gear set 20 and a motor assembly 30.

As shown in FIG. 1, FIG. 3 and FIG. 7, the housing 10 has a hollow cavity 10a and a first flow guide channel 10b.

The hollow cavity 10a has a gear mounting area 10a1 and a drive mounting area 10a2. The gear mounting area 10a1 is used for mounting the gear set 20, and the drive mounting area 10a2 is used for mounting the motor assembly 30. The motor assembly 30 is drivingly connected to the gear set 20 to drive the gear set 20, and a torque can be transmitted to wheels of the vehicle through the gear set 20. The motor assembly 30 does not have a separate housing. A stator assembly of the motor assembly 30 is directly disposed in the drive mounting area 10a2, and a rotor assembly is rotatably disposed in the stator assembly.

A coolant oil is contained in the hollow cavity 10a, and a portion of the gear set 20 is extended below a liquid level of the coolant oil. A portion of the coolant oil contacts the gear set 20 to be accelerated by the gear set 20.

An end of the first flow guide channel 10b is in communication with the gear mounting area 10a1, and another end of the first flow guide channel 10b is in communication with the drive mounting area 10a2. The first flow guide channel 10b is used for the coolant oil to flow from the gear mounting area 10a1 into the drive mounting area 10a2. It can be understood that when the gear set 20 is in a rotating state, an accelerated coolant oil can enter the first flow guide channel 10b and flow, along the first flow guide channel 10b, into the drive mounting area 10a2, to cool the motor assembly 30 located in the drive mounting cavity.

It should be noted that at least one gear of the gear set 20 and the motor assembly 30 are located in a same plane perpendicular to an axial direction. The axial direction is an extending direction of a rotation axis of the gear set 20, and is also an extending direction of a rotation axis of the motor assembly 30.

In some embodiments, the housing 10 includes two end walls 11 and a side wall 12 enclosed between the two end walls 11. The two end walls 11 and the side wall 12 enclose the hollow cavity 10a. It can be understood that the two end walls 11 are respectively located at two ends of the housing 10, and the side wall 12 is disposed between the two end walls 11 to enclose the hollow cavity 10a.

In some embodiments, the housing 10 includes a first flow guide body 13 and a second flow guide body 14. The first flow guide body 13 and the second flow guide body 14 are both located between the gear mounting area 10a1 and the drive mounting area 10a2, that is, between the gear set 20 and the motor assembly 30. The first flow guide channel 10b is defined between the first flow guide body 13 and the second flow guide body 14.

Optionally, the first flow guide body 13 and the second flow guide body 14 may be disposed on the end wall 11. The first flow guide body 13 and the second flow guide body 14 are disposed in parallel to each other.

Exemplarily, a portion of the side wall 12 is located at a side edge of the drive mounting area 10a2 to form a portion of a second flow guide channel 10c. The second flow guide channel 10c is in communication with the first flow guide channel 10b.

In this way, the coolant oil flowing into the first flow guide channel 10b can flow into the second flow guide channel 10c. It should be noted that the second flow guide channel 10c is defined between the motor assembly 30 and the side wall 12 of the housing 10. That is, a surface of the motor assembly 30 participates in forming the second flow guide channel 10c. This surface can contact the coolant oil in the second flow guide channel 10c, so that the coolant oil flowing into the second flow guide channel 10c can cool the motor assembly 30.

In some embodiments, in order to increase a pressure of the coolant oil entering the second flow guide channel 10c, a cross-sectional area of the second flow guide channel 10c is gradually decreased from a side of the gear mounting area 10a1 to a side of the drive mounting area 10a2. For example, an interval between the first flow guide body 13 and the second flow guide body 14 is gradually narrowed from a side of the gear mounting area 10a1 to a side of the drive mounting area 10a2.

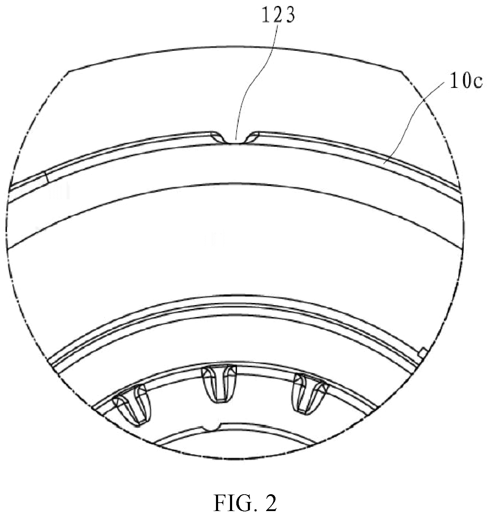

As shown in FIG. 2, exemplarily, the side wall 12 has an oil blocking protrusion 123 protruding inward. The oil blocking protrusion 123 is located in the second flow guide channel 10c, and is located at a top of the second flow guide channel 10c. That is, the oil blocking protrusion 123 may be located directly above a highest position of the side wall 12 of the motor assembly 30.

The oil blocking protrusion 123 may be a strip-shaped convex rib, whose extending direction is perpendicular to a length extending direction of the second flow guide channel 10c.

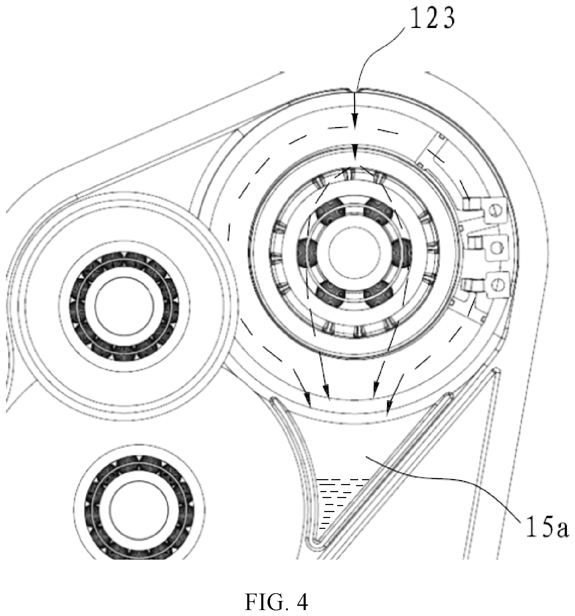

It should be noted that, due to an effect of centrifugal force, at least a portion of the coolant oil will flow along the side wall 12 of the housing 10 of the second flow guide channel 10c. As shown in FIG. 4, by adding the oil blocking protrusion 123, a portion of the coolant oil can be blocked by the oil blocking protrusion 123, to fall onto the motor assembly 30 under an action of gravity and flow down along outer peripheral surfaces of two sides, which are left and right sides in FIG. 4, of the motor assembly 30. Additionally, because gaps exist in windings of the motor assembly 30, a portion of the coolant oil can seep downward from the above gaps.

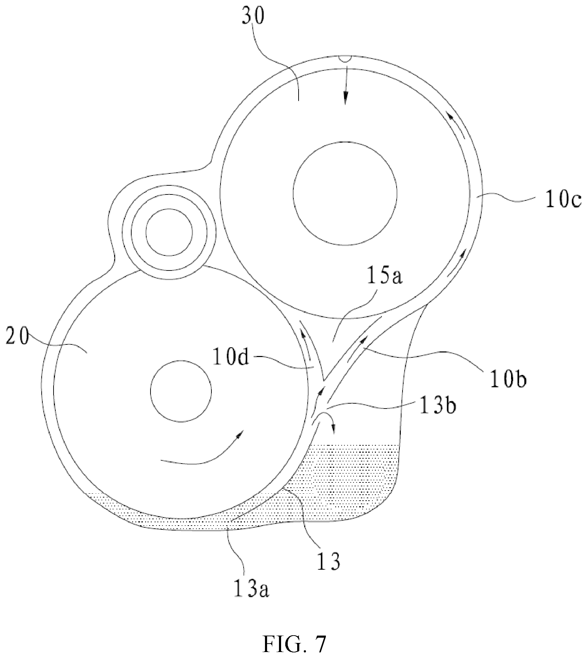

As shown in FIG. 1 and FIG. 7, exemplarily, the hollow cavity 10a has an oil storage area 10a3 for storing the coolant oil. The first flow guide body 13 is located between two components which are the gear mounting area 10a1 and the drive mounting area 10a2, and the oil storage area 10a3. An oscillation of a liquid level of the coolant oil in the oil storage area 10a3 can be limited by the first flow guide body 13, thereby stabilizing the liquid level of the coolant oil.

Optionally, a portion of the side wall 12 of the housing 10 is located at a side edge of the oil storage area 10a3. The cooling oil is stored between the the portion of side wall 12 of the housing 10 and the end wall 11 of the housing 10. The oil storage area 10a3 can collect the coolant oil after cooling the motor assembly 30.

In some embodiments, an oil passing channel 13a is provided between an end of the first flow guide body 13 close to the gear mounting area 10a1, and the side wall 12 of the hollow cavity 10a. The oil passing channel 13a is used for communicating the oil storage area 10a3 with the gear mounting area 10a1. In this embodiment, the oil passing channel 13a is located between an end of the first flow guide body 13 and the side wall 12 of the housing 10. The coolant oil can flow from the oil storage area 10a3, through the oil passing channel 13a, into the gear mounting area 10a1.

In some embodiments, an end of the first flow guide body 13 close to the gear mounting area 10a1 is connected to the side wall 12 of the housing 10. The first flow guide body 13 is provided with an oil passing channel 13a. The oil passing channel 13a is used for communicating the oil storage area 10a3 with the gear mounting area 10a1. Optionally, a portion of the first flow guide body 13 is located between the oil passing channel 13a and the side wall 12 of the housing 10, to raise a minimum liquid level of the oil storage area 10a3. Furthermore, this portion of the first flow guide body 13 can perform a primary filtration on the coolant oil entering the oil storage area 10a3 through the oil passing channel 13a, to reduce the precipitated impurities entering the gear mounting area 10a1 through the oil passing channel 13a.

Exemplarily, the first flow guide body 13 is provided with a first oil return hole 13b. The first oil return hole 13b is used for communicating the first flow guide channel 10b with the oil storage area 10a3, to allow the coolant oil in the first flow guide channel 10b to flow back to the oil storage area 10a3. In this way, the coolant oil in the first flow guide channel 10b can flow into the oil storage area 10a3 to supplement the coolant oil in the oil storage area 10a3.

Exemplarily, an oil suction port is disposed on the end wall 11 or the side wall 12. The oil suction port is located in the oil storage area 10a3 for the coolant oil in the oil storage area 10a3 to flow out. Optionally, the oil suction port may be in communication with an oil inlet of an oil pump, so that the coolant oil flowing out from the oil suction port is pumped to the outside of the electric drive assembly, and then flows, after being cooled, into the electric drive assembly, to cool the motor assembly 30, and then flows back to the oil storage area 10a3.

Exemplarily, the housing 10 includes a third flow guide body 15 disposed on the end wall 11. An end of the third flow guide body 15 is connected to the first flow guide body 13. In this way, there is no gap between the third flow guide body 15 and the first flow guide body 13. The third flow guide body 15 is extended along a side edge of the gear mounting area 10a1 and in an extending direction facing a side away from the first flow guide body 13. It can be understood that an end of the first flow guide body 13 and an end of the third flow guide body 15 are connected, and an interval between another ends of the first flow guide body 13 and the third flow guide body 15 is gradually increased.

The third flow guide body 15 is used to form a portion of a third flow guide channel 10d. It can be understood that an end at an inlet of the third flow guide channel 10d is close to an end at an inlet of the first flow guide channel 10b. A portion of the coolant oil accelerated by the gear set 20 enters the first flow guide channel 10b, and a portion of the coolant oil accelerated by the gear set 20 enters the third flow guide channel 10d.

An end of the third flow guide channel 10d faces the drive mounting area 10a2. The coolant oil entering the third flow guide channel 10d flows out from the end facing the drive mounting area 10a2 to cool the motor assembly 30.

In some embodiments, there is a gap between the drive mounting area 10a2 and the gear mounting area 10a1, and an end of the third flow guide channel 10d faces the gap.

Exemplarily, as shown in FIG. 1, FIG. 4 and FIG. 7, an oil collection cavity 15a is defined between the third flow guide body 15 and the second flow guide body 14. The oil collection cavity 15a is located in the hollow cavity 10a. It can be understood that the two end walls 11 participate in enclosing the oil collection cavity 15a. The oil collection cavity 15a is located below the drive mounting area 10a2, and an opening of the oil collection cavity 15a faces the drive mounting area 10a2. In this way, the coolant oil flowing down from the motor assembly 30 can flow back into the oil collection cavity 15a.

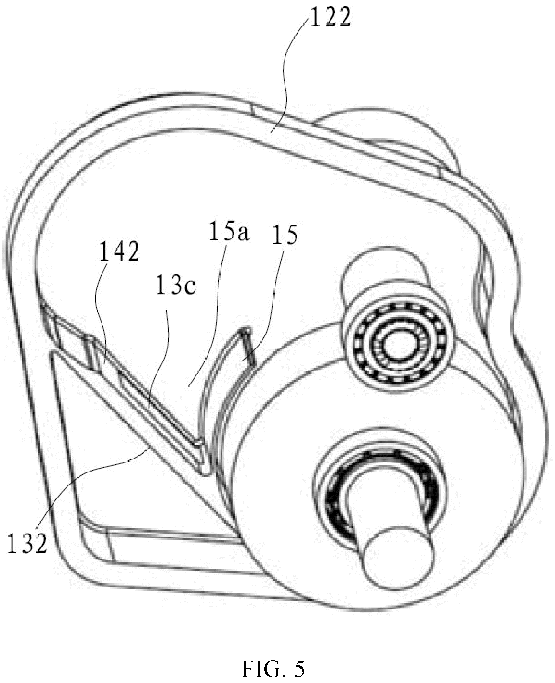

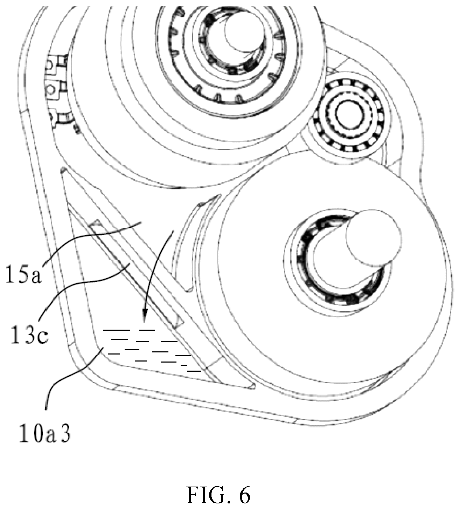

As shown in FIG. 5 and FIG. 6, portions of the first flow guide body 13 and the second flow guide body 14 are connected to form a connecting portion. A second oil return hole 13c is disposed on the connecting portion. The second oil return hole 13c is used for communicating the oil collection cavity 15a with the oil storage area 10a3. In this way, the coolant oil in the oil collection cavity 15a directly flows into the oil storage area 10a3 without passing through the first flow guide channel 10b.

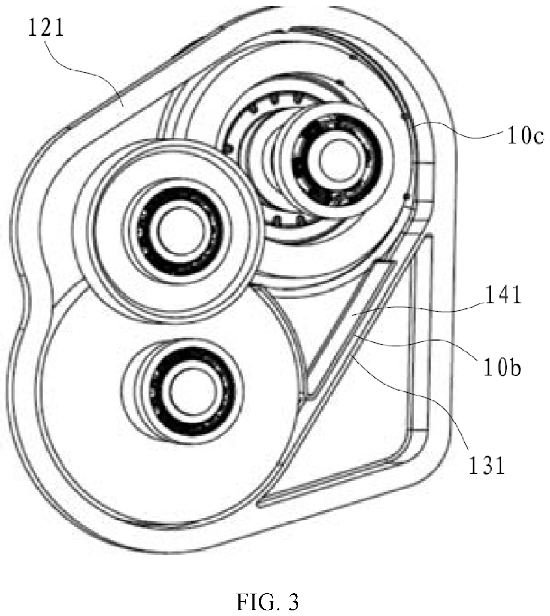

Exemplarily, as shown in FIG. 3 and FIG. 5, the side wall 12 includes a first side wall 121 and a second side wall 122. The first side wall 121 is enclosed around one of end walls 11 to form a first half-shell part. The second side wall 122 is enclosed around another one of end walls 11 to form a second half shell part. The first half shell part and the second half shell part are joined to enclose the hollow cavity 10a.

The first flow guide body 13 includes a first flow guide rib 131 disposed at the first half shell part and a second flow guide rib 132 disposed at the second half shell part. The first flow guide rib 131 and the second flow guide rib 132 are opposite to each other. After the first half shell part and the second half shell part are joined, the first flow guide rib 131 and the second flow guide rib 132 are attached together to close a gap therebetween.

The second flow guide body 14 includes a third flow guide rib 141 disposed at the first half shell part and a fourth flow guide rib 142 disposed at the second half shell part. The third flow guide rib 141 and the fourth flow guide rib 142 are opposite to each other. After the first half shell part and the second half shell part are joined, the third flow guide rib 141 and the fourth flow guide rib 142 are attached together to close a gap therebetween.

The first flow guide channel 10b is jointly defined by the first flow guide rib 131, the second flow guide rib 132, the third flow guide rib 141 and the fourth flow guide rib 142.

Exemplarily, as shown in FIG. 5 and FIG. 6, the second flow guide rib 132 and the fourth flow guide rib 142 are connected to form a connecting portion. A second oil return hole 13c is disposed on the connecting portion. The second oil return hole 13c is used for communicating the oil collection cavity 15a with the oil storage area 10a3.

Optionally, the connecting portion may be formed by connecting partial areas of adjacent surfaces along a thickness direction of the second flow guide rib 132 and the fourth flow guide rib 142. The connecting portion may also be formed by connecting entire areas of the adjacent surfaces along the thickness direction of the second flow guide rib 132 and the fourth flow guide rib 142. At this time, the connecting portion formed is an integral rib structure, and correspondingly, the first flow guide channel 10b is located between the first flow guide rib 131 and the third flow guide rib 141.

In some embodiments, the first flow guide channel 10b is extended along a tangential direction of the gear set 20. It can be understood that the coolant oil accelerated by the gear set 20 leaves the gear set 20 along the tangential direction of the gear set 20. The first flow guide channel 10b is extended in the tangential direction of the gear set 20 to be capable of reducing a flow resistance of the coolant oil.

It can be understood that the tangential direction of the gear set 20 refers to a tangential direction corresponding to a gear of the gear set 20 that is extended into the coolant oil.

In some embodiments, the first flow guide channel 10b is extended along the tangential direction of the motor assembly 30. In this way, a resistance of the coolant oil flowing to an outer surface of the motor assembly 30 can be reduced.

In the description of the invention, the description with reference to the terms "some embodiments", "exemplarily", "some examples" or the like means that a specific feature, structure, material or characteristic described in connection with the embodiment or example is included in at least one embodiment or example of the embodiments of the invention. In the invention, the illustrative expressions of the above terms are not necessarily directed to the same embodiment or example. Moreover, the specific features, structures, materials or characteristics described may be combined in any one or more embodiments or examples in a suitable manner. In addition, those skilled in the art can combine different embodiments or examples described in the invention and the features of different embodiments or examples without conflicting with each other.

The above descriptions are only preferred embodiments of the invention, and are not intended to limit the invention. For those skilled in the art, the invention may have various modifications and changes. Any modification, equivalent replacement, improvement and the like made within the spirit and principle of the invention shall be included in the protection scope of the invention.

## Claims

1. A housing, **characterized by** comprising:
a hollow cavity having a gear mounting area and a drive mounting area, the gear mounting area being used for mounting a gear set, the drive mounting area being used for mounting a motor assembly; and
a first flow guide channel, an end of which being in communication with the gear mounting area, another end of which being in communication with the drive mounting area, the first flow guide channel being used for allowing a coolant oil to flow from the gear mounting area into the drive mounting area.

2. The housing according to claim 1, wherein the housing comprises two end walls and a side wall which is enclosed between the two end walls, the two end walls and the side wall enclosing the hollow cavity;
the housing comprises a first flow guide body and a second flow guide body, both the first flow guide body and the second flow guide body being located between the gear mounting area and the drive mounting area, the first flow guide channel being defined between the first flow guide body and the second flow guide body.

3. The housing according to claim 2, wherein a portion of the side wall is located at a side edge of the drive mounting area to form a portion of second flow guide channel, the second flow guide channel being in communication with the first flow guide channel.

4. The housing according to claim 3, wherein the side wall is provided with an oil blocking protrusion protruding inward, the oil blocking protrusion being located in the second flow guide channel and at a top of the second flow guide channel.

5. The housing according to claim 2, wherein the hollow cavity is provided with an oil storage area, the first flow guide body being located between two components which are the gear mounting area and the drive mounting area, and the oil storage area.

6. The housing according to claim 5, wherein an oil passing channel is provided between an end of the first flow guide body close to the gear mounting area and a side wall of the housing, the oil passing channel being used for communicating the oil storage area with the gear mounting area; or
an end of the first flow guide body close to the gear mounting area is connected to the side wall of the housing, the first flow guide body being provided with the oil passing channel for communicating the oil storage area with the gear mounting area, a portion of first flow guide body being located between the oil passing channel and the side wall of the housing.

7. The housing according to claim 5, wherein the first flow guide body is provided with a first oil return hole which is used for communicating the first flow guide channel with the oil storage area, to allow the coolant oil in the first flow guide channel to flow back to the oil storage area.

8. The housing according to claim 5, wherein an oil suction port is disposed on the end wall or the side wall, the oil suction port being located in the oil storage area for the coolant oil in the oil storage area to flow out.

9. The housing according to claim 2, wherein the housing comprises a third flow guide body disposed on the end wall, an end of the third flow guide body being connected to the first flow guide body, the third flow guide body extending along a side edge of the gear mounting area and in an extending direction facing a side away from the first flow guide body;
the third flow guide body is used to form a portion of third flow guide channel, an end of the third flow guide channel facing the drive mounting area.

10. The housing according to claim 9, wherein an oil collection cavity is defined between the third flow guide body and the second flow guide body, the oil collection cavity being located below the drive mounting area, an opening of the oil collection cavity facing the drive mounting area;
portions of the first flow guide body and the second flow guide body are connected to form a connecting portion, a second oil return hole being disposed on the connecting portion, the second oil return hole being used for communicating the oil collection cavity with the oil storage area.

11. The housing according to claim 2, wherein the side wall comprises a first side wall and a second side wall, the first side wall being enclosed around one of end walls to form a first half shell part, the second side wall being enclosed around another one of end walls to form a second half shell part;
the first flow guide body comprises a first flow guide rib disposed at the first half shell part and a second flow guide rib disposed at the second half shell part, the second flow guide body comprising a third flow guide rib disposed at the first half shell part and a fourth flow guide rib disposed at the second half shell part;
the first half-shell part and the second half-shell part are joined to enclose the hollow cavity;
the first flow guide rib and the second flow guide rib are opposite to each other, and the third flow guide rib and the fourth flow guide rib are opposite to each other, to jointly define the first flow guide channel.

12. The housing according to claim 11, wherein the second flow guide rib and the fourth flow guide rib are connected to form a connecting portion, a second oil return hole being disposed on the connecting portion, the second oil return hole being used for communicating the oil collection cavity with the oil storage area.

13. An electric drive assembly, **characterized by** comprising:
the housing according to any one of claims 1 to 12, a coolant oil being contained in the hollow cavity;
a gear set disposed in the gear mounting area, a portion of the gear set extending below a liquid level of the coolant oil; and
a motor assembly, disposed in the drive mounting area and drivingly connected to the gear set.

14. The electric drive assembly according to claim 13, wherein the first flow guide channel is extended in a tangential direction of the gear set; and/or
the first flow guide channel is extended in a tangential direction of the motor assembly.

15. An electric drive assembly, **characterized by** comprising:
the housing according to any one of claims 2 to 12;
a gear set disposed in the gear mounting area; and
a motor assembly, disposed in the drive mounting area and drivingly connected to the gear set;
wherein the second flow guide channel is defined between the motor assembly and the side wall.
